# EUROPÄISCHE PATENTSCHRIFT

(11) **EP 3 924 630 B1**
(45) Veröffentlichungstag und Bekanntmachung des Hinweises auf die Patenterteilung: **27.09.2023**
(21) Anmeldenummer: 20703386.1
(22) Anmeldetag: 30.01.2020
(51) Int. Cl.: F16D 1/08

(54) **ANORDNUNG ZUM KLEMMVERBINDEN EINER WELLE, PLANETENGETRIEBE UND VERFAHREN ZUR HERSTELLUNG**
ASSEMBLY FOR CLAMPING CONNECTION OF A SHAFT, PLANETARY GEARBOX AND METHOD FOR PRODUCTION
ENSEMBLE POUR LE RACCORDEMENT PAR SERRAGE D'UN ARBRE, BOÎTE DE VITESSES À TRAINS ÉPICYCLOÏDAUX ET PROCÉDÉ POUR LEUR FABRICATION

(30) Priorität: 13.02.2019 DE 102019001050
(43) Veröffentlichungstag der Anmeldung: 22.12.2021
(73) Patentinhaber: SEW-EURODRIVE GmbH & Co. KG, 76646 Bruchsal (DE)
(72) Erfinder: SCHNEIDER, Norbert, 64668 Rimbach (DE)
(86) Internationale Anmeldenummer: PCT/EP2020/025042
(87) Internationale Veröffentlichungsnummer: WO 2020/164801

(56) Entgegenhaltungen:
- DE-A1- 19 907 181
- DE-A1-102011 005 408
- DE-A1-102015 007 470
- DE-A1-102018 003 823
- DE-U1-202010 015 807

## Beschreibung

Die Erfindung betrifft eine Anordnung zum Klemmverbinden einer Welle, ein Planetengetriebe und ein Verfahren zur Herstellung.

Aus der DE 10 2011 013 887 A1 **ist eine** Klemmkupplung bekannt.

Aus der DE 201 19 067 U1 ist eine Klemmverbindungsvorrichtung bekannt.

**Aus der** DE 199 07 181 A1 **ist als nächstliegender Stand der Technik eine Verbindung einer geschlitzten Hohlwelle mit einem eingreifenden Gegenstück bekannt.**

**Aus der** DE 10 2011 005408 A1 **ist eine Fügeverbindung bekannt.**

**Aus der** DE 20 2010 015807 U1 **ist eine Verbindung einer Hohlwelle mit einer in sie einsetzbaren Welle bekannt.**

**Aus der** DE 10 2018 003823 A1 **ist ein Verfahren zur Herstellung einer Welle-Nabe-Verbindung sowie Rotorwelle mit darauf gefügten Elektroblechpaketen bekannt.**

**Aus der** DE 10 2015 007470 A1 **ist ein Verfahren zum Herstellen einer WElle-Nabe-Verbindung bekannt.**

Der Erfindung liegt daher die Aufgabe zugrunde, eine möglichst kompakte Spannverbindung bereitzustellen.

Erfindungsgemäß wird die Aufgabe bei der Anordnung nach den in Anspruch 1 und bei dem Planetengetriebe nach den in Anspruch 11 und bei dem Verfahren nach Anspruch 10 angegebenen Merkmalen gelöst.

Wichtige Merkmale der Erfindung bei der Anordnung zum Klemmverbinden einer Welle mit einem einen Hohlwellenbereich aufweisenden Wellenteils mittels eines auf den Hohlwellenbereich aufgeschobenen Spannrings sind, dass der Hohlwellenbereich radial durchgehende, in Umfangsrichtung voneinander beabstandete, insbesondere regelmäßig beabstandete, Schlitze aufweist,
wobei die Innenwandung des Hohlwellenbereichs in Umfangsrichtung zwischen, insbesondere mittig zwischen, jeweils zwei in Umfangsrichtung zueinander nächstbenachbarten der Schlitze jeweils einen laserstrukturierten Bereich aufweist.

Von Vorteil ist dabei, dass der Reibungskoeffizient mittels der Laserstrukturierung erhöht ist und somit eine kompakte leistungsfähige Verbindung bereitgestellt ist. Somit ist der Spannring samt Spannschraube kleiner dimensionierbar bei gleichem maximal bereit stellbarem Drehmoment der kraftschlüssigen Verbindung des Hohlwellenbereichs mit der Welle.

Somit ist eine kompakte Spannverbindung erreicht.

Bei einer vorteilhaften Ausgestaltung erstrecken sich die Schlitze axial. Von Vorteil ist dabei, dass der Hohlwellenbereich mit einer geringen Aufschrumpfkraft elastisch auslenkbar ist.

**Erfindungsgemäß** sind die Schlitze zum axialen Ende des Hohlwellenbereichs hin offen, insbesondere also in die Umgebung münden. Von Vorteil ist dabei, dass der Hohlwellenbereich am axialen Endbereich des Wellenteils anordenbar ist und somit die Spannverbindung am axialen Endbereich anordenbar ist. Die Welle wird also in den Hohlwellenbereich durch diesen axialen Endbereich durchgeführt und dort der Hohlwellenbereich kraftschlüssig verbunden, insbesondere aufgeschrumpft.

**Erfindungsgemäß** weist der laserstrukturierte Bereich Tiefschmelzpunkte und/oder Aufschmelzpunkte auf,
insbesondere wobei die Aufschmelzpunkte als Erhebungen von mehr als 1µm und weniger als 10 µm ausgeführt sind und/oder wobei die Tiefschmelzpunkte als Vertiefungen von mehr als 1µm und weniger als 10 µm ausgeführt sind. Von Vorteil ist dabei, dass eine einfache schnelle Herstellung ermöglicht ist, indem der Laserstrahl von radial innen gegen die Wandung des Hohlwellenbereichs ausstrahlbar ist. Außerdem muss nicht die gesamte Innenwandung, sondern nur ein Bereich zwischen den schlitzen, insbesondere mittig zwischen den schlitzen, bestrahlt werden. Die Höhe oder Tiefe der Strukturierung ist derart gewählt, dass keine wesentliche Störung der Geometrie der Bauteile bewirkt wird, aber die Reibung verstärkt wird.

Außerdem sind die Erhebungen und/oder Vertiefungen derart gewählt, dass beim Verbinden kein Formschluss, sondern nur ein elastisches und/oder plastisches Verformen der Erhebungen bewirkt wird. Die erhobenen Bereiche sind somit stärker angepresst als hierzu direkt benachbarte Bereiche.

**Erfindungsgemäß** sind die Tiefschmelzpunkte und/oder die Aufschmelzpunkte jeweils axial weiter ausgedehnt als in Umfangsrichtung. Von Vorteil ist dabei, dass somit eine Anisotropie des Reibungskoeffizienten bewirkbar ist, wobei in Umfangsrichtung eine größere Reibung als in axialer Richtung bewirkbar ist. Somit ist auch bei sehr kleiner strukturierter Fläche eine starke Beeinflussung der Reibung in Umfangsrichtung ermöglicht.

Bei einer vorteilhaften Ausgestaltung überdeckt der jeweilige laserstrukturierte Bereich in Umfangsrichtung einen Umfangswinkelbereich zwischen 10° und 60°, insbesondere zwischen 20° und 40°. Von Vorteil ist dabei, dass in Umfangsrichtung nur Teilbereiche strukturiert werden müssen. Somit sind Kosten und Aufwand und Bearbeitungszeit beim Strukturieren mit dem Laser niedrig.

Bei einer vorteilhaften Ausgestaltung ist zur Fixierung der relativen Lage des Hohlwellenbereichs zum Spannring ein erster Teilbereich eines Schraubteils, insbesondere einer Madenschraube, in eine radial gerichtete, im Hohlwellenbereich angeordnete, Gewindebohrung eingeschraubt und der restliche Teilbereich des Schraubteils ist im Spannring angeordnet. Von Vorteil ist dabei, dass die relative Lage des Spannrings zum Hohlwellenbereich festgelegt ist.

Bei einer vorteilhaften Ausgestaltung überlappt der von einem Schraubteil überdeckte Radialabstandsbereich mit dem von dem Hohlwellenbereich überdeckten Radialabstandsbereich zur Fixierung der relativen Lage des Hohlwellenbereichs und überlappt mit dem von dem Spannring überdeckten Radialabstandsbereich,
insbesondere wobei der von dem Hohlwellenbereich überdeckte Radialabstandsbereich mit dem von dem Spannring überdeckten Radialabstandsbereich nicht überlappt, insbesondere nur an ihn angrenzt. Von Vorteil ist dabei, dass eine kostengünstige Verbindung realisierbar ist.

Bei einer vorteilhaften Ausgestaltung ist die in den Spannring eingeschraubte Schraube, insbesondere Spannschraube, tangential gerichtet angeordnet. Von Vorteil ist dabei, dass eine kostengünstige möglichst kleine Spannschraube verwendbar ist.

Bei einer vorteilhaften Ausgestaltung ist ein als Sonnenrad fungierendes Einsteckritzel auf der vom Hohlwellenbereich axial abgewandten Stirnseite des Wellenteils in das Wellenteil eingepresst und drehfest verbunden. Von Vorteil ist dabei, dass eine kompakte Anbindung des Sonnenrads an eine antreibende Rotorwelle eines Elektromotors ermöglicht ist.

Bei einer vorteilhaften Ausgestaltung weist der Spannring an einer Umfangsposition einen radial und axial durchgehenden Schlitz auf,
wobei die Schraube durch den Schlitz durchgeführt ist, wobei die Schraube in eine Gewindebohrung des Spannrings zumindest teilweise eingeschraubt ist und der Kopf der Schraube den auf der von der Gewindebohrung abgewandten Seite des Schlitzes den Spannring zur Gewindebohrung hindrückt. Von Vorteil ist dabei, dass ein kostengünstiger Spannring verwendbar ist.

Wichtige Merkmale bei dem Planetengetriebe mit einer vorgenannten Anordnung sind, dass die Welle eine Rotorwelle eines Elektromotors ist oder mit einer Rotorwelle eines Elektromotors drehfest verbunden ist,
ein als Sonnenrad fungierendes Einsteckritzel auf der vom Hohlwellenbereich axial abgewandten Stirnseite des Wellenteils in das Wellenteil eingepresst und drehfest verbunden ist,
wobei das Sonnenrad mit Planetenrädern im Eingriff ist, welche mit einem Hohlrad im Eingriff ist, zu dem das Wellenteil drehbar gelagert ist,
wobei die Planetenräder auf Planetenbolzen drehgelagert sind, die in einen als Abtriebswelle des Planetengetriebes fungierenden Planetenträger eingepresst sind.

Von Vorteil ist dabei, dass ein sehr kompakter Antrieb mit von einem Elektromotor angetriebenem Planetengetriebe bereit stellbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist eine erfindungsgemäße Spannverbindung schematisch dargestellt.

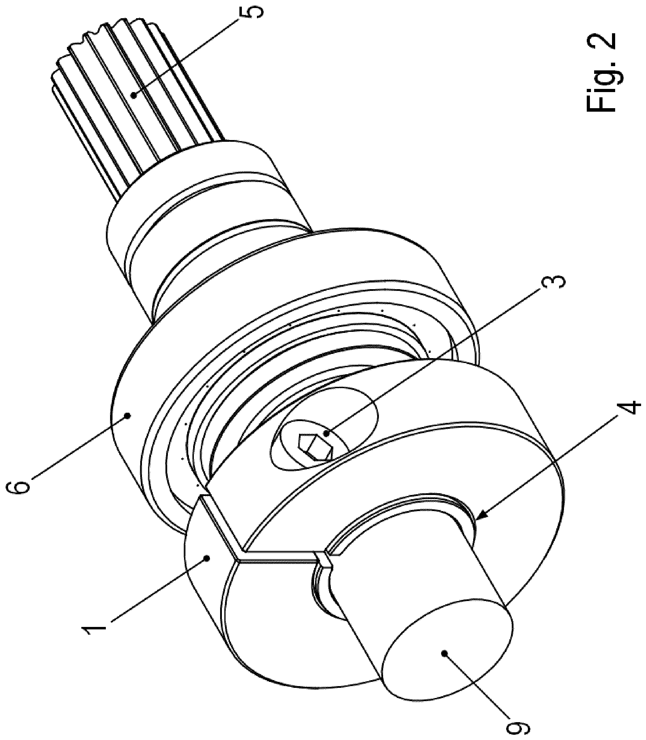

In der Figur 2 ist eine zugehörige Schrägansicht dargestellt.

Wie in den Figuren dargestellt, ist auf einen Hohlwellenbereich 4 ein Spannring 1 aufgeschoben, der an einer Umfangsstelle einen radial durchgehenden Schlitz aufweist, durch welchen eine tangential gerichtete Spannschraube 3 geführt ist. Die Spannschraube 3 ist in eine Gewindebohrung des Spannrings 1 derart eingeschraubt, dass der Schraubenkopf der Spannschraube 3 den auf der von der Gewindebohrung abgewandten Seite des Schlitzes angeordneten Teilbereich des Spannrings 1 zu dem die Gewindebohrung aufweisenden Teilbereich des Spannrings 1 hindrückt.

Beim Einschrauben der Spannschraube 3 wird somit der Spannring 1 auf den Hohlwellenbereich 4 aufgeschrumpft.

Dabei weist der Hohlwellenbereich 4 zumindest zwei sich in Umfangsrichtung diametral gegenüberliegende, radial durchgehende, zum axialen Ende des Hohlwellenbereichs hin offene Schlitze auf.

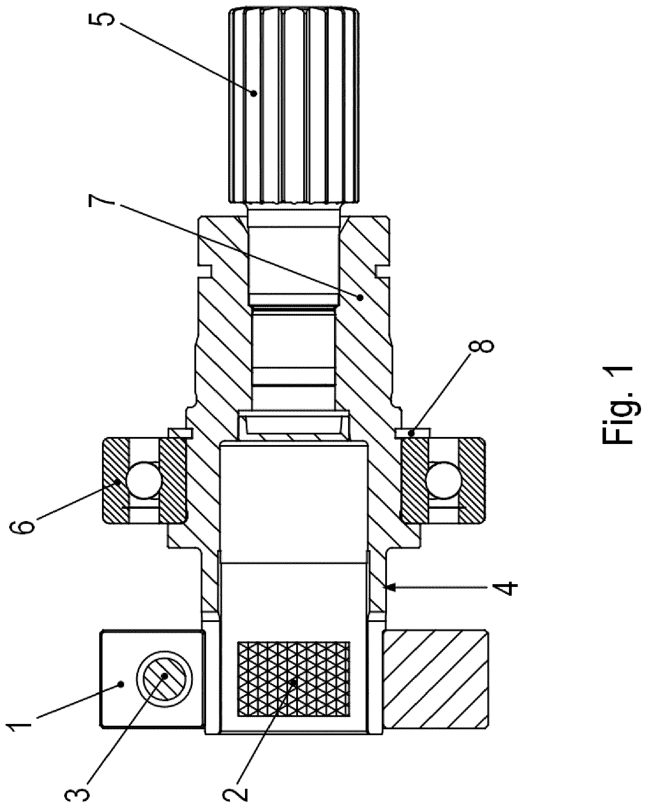

Somit drückt der Spannring 1 beim Einschrauben der Spannschraube 3 in die Gewindebohrung den Hohlwellenbereich 4 zunehmend auf eine in den Hohlwellenbereich 4 eingesteckte, mittels der Spannschraube 3 mit dem Hohlwellenbereich 4 kraftschlüssig zu verbindende Welle 9. Diese Welle 9 ist in der Figur 1 nicht dargestellt.

Eine in der Figur 1 nicht gezeigte, radial gerichtete Madenschraube, die in Umfangsrichtungsrichtung von den Schlitzen beabstandet ist, aber in dem von den Schlitzen axial überdeckten Bereich angeordnet ist, ist teilweise in eine in den Hohlwellenabschnitt eingebrachte, radial gerichtete Gewindebohrung eingeschraubt und sichert somit die Spannverbindung, insbesondere den Spannring 1, in Umfangsrichtung.

Spannring 1 und Hohlwellenbereich 4 sind also in Umfangsrichtung mittels der Madenschraube bezüglich ihrer relativen Drehlage zueinander festgelegt.

In Umfangsrichtung mittig zwischen seinen Schlitzen weist der Hohlwellenbereich 4 an seiner Innenwandung, insbesondere Innenseite, jeweils einen laserstrukturierten Bereich auf.

Dieser jeweilige Bereich ist dabei mittels Laser derart mit Tiefschmelzpunkten und/oder Aufschmelzpunkten versehen, dass der Reibungskoeffizient zwischen dem Hohlwellenbereich und der Welle erhöht ist. Somit ist eine kleinere Spannschraube 3 und auch ein schmalerer Spannring 1 verwendbar. Ein Tiefschmelzpunkt fungiert dabei als Vertiefung und ein Aufschmelzpunkt als Erhebung.

Der jeweilige laserstrukturierte Bereich überdeckt in Umfangsrichtung jeweils einen Umfangswinkel, dessen Wert aus dem Intervall zwischen 10° und 60° gewählt ist, insbesondere aus dem Intervall zwischen 20° und 40° gewählt ist.

Der Spannring 1 liegt an einem am äußeren Umfang des Hohlwellenbereichs 4 angeordneten Wellenbund an.

Der hohlwellenberiech 4 ist ein Teilbereich eines Wellenteils 7. Das Wellenteil 7 weist an seinem vom Hohlwellenbereich 4 abgewandten axialen Endbereich eine axial gerichtete Aufnahmebohrung auf, in welche ein Einsteckritzel 5 eingepresst ist, welches als Sonnenrad eines Planetengetriebes fungiert.

Das Wellenteil 7 ist mittels eines Lagers 6 drehbar gelagert. Das Lager 6 ist axial gesichert mittels eines in einer umlaufenden Ringnut angeordneten Sicherungsrings 8.

Die Aufschmelzpunkte sind vorzugsweise als Erhebungen von mehr als 1µm und weniger als 10 µm ausgeführt. Die Tiefschmelzpunkte sind vorzugsweise als Vertiefungen von mehr als 1µm und weniger als 10 µm ausgeführt. Die Tiefschmelzpunkte und/oder die Aufschmelzpunkte sind weiter vorzugsweise jeweils axial weiter ausgedehnt als in Umfangsrichtung.

Insbesondere überdeckt der jeweilige laserstrukturierte Bereich in Umfangsrichtung einen Umfangswinkelbereich zwischen 10° und 60°, insbesondere zwischen 20° und 40°.

Bei weiteren erfindungsgemäßen Ausführungsbeispielen ist eine größere Anzahl von Schlitzen am Hohlwellenbereich 4 vorgesehen, wobei diese Schlitze in Umfangsrichtung voneinander regelmäßig beabstandet sind. In Umfangsrichtung jeweils mittig zu jeweils zwei zueinander nächstbenachbarten der Schlitze ist ein laserstrukturierter Bereich an der Innenwandung des Hohlwellenbereichs 4 angeordnet.

### Bezugszeichenliste

1 Spannring
2 Laserstrukturierter Bereich
3 Spannschraube
4 Hohlwellenbereich
5 Einsteckritzel
6 Lager
7 Wellenteil
8 Sicherungsring
9 Welle

## Patentansprüche

1. Anordnung zum Klemmverbinden einer Welle (9) mit einem einen Hohlwellenbereich (4) aufweisenden Wellenteils (7) mittels eines auf den Hohlwellenbereich (4) aufgeschobenen Spannrings (1),
wobei der Hohlwellenbereich (4) radial durchgehende, in Umfangsrichtung voneinander beabstandete, insbesondere regelmäßig beabstandete, Schlitze aufweist,
**dadurch gekennzeichnet, dass**
die Innenwandung des Hohlwellenbereichs (4) in Umfangsrichtung zwischen, insbesondere mittig zwischen, jeweils zwei in Umfangsrichtung zueinander nächstbenachbarten der Schlitze jeweils einen laserstrukturierten Bereich (2) aufweist,
**die Schlitze zum axialen Ende des Hohlwellenbereichs (4) hin offen sind, insbesondere also in die Umgebung münden,**
**der laserstrukturierte Bereich (2) Tiefschmelzpunkte und/oder Aufschmelzpunkte aufweist,**
**die Tiefschmelzpunkte und/oder die Aufschmelzpunkte jeweils axial weiter ausgedehnt sind als in Umfangsrichtung.**

2. Anordnung nach Anspruch 1,
**dadurch gekennzeichnet, dass**
die Schlitze sich axial erstrecken.

3. Anordnung nach einem der vorangegangenen Ansprüche,
**dadurch gekennzeichnet, dass**
**die Aufschmelzpunkte als Erhebungen von mehr als 1µm und weniger als 10 µm ausgeführt sind und/oder wobei die Tiefschmelzpunkte als Vertiefungen von mehr als 1µm und weniger als 10 µm ausgeführt sind.**

4. Anordnung nach einem der vorangegangenen Ansprüche,
**dadurch gekennzeichnet, dass**
der jeweilige laserstrukturierte Bereich (2) in Umfangsrichtung einen Umfangswinkelbereich zwischen 10° und 60°, insbesondere zwischen 20° und 40°, überdeckt.

5. Anordnung nach einem der vorangegangenen Ansprüche,
**dadurch gekennzeichnet, dass**
zur Fixierung der relativen Lage des Hohlwellenbereichs (4) zum Spannring (1) ein erster Teilbereich eines Schraubteils, insbesondere einer Madenschraube, in eine radial gerichtete, im Hohlwellenbereich (4) angeordnete, Gewindebohrung eingeschraubt ist und der restliche Teilbereich des Schraubteils im Spannring (1) angeordnet ist.

6. Anordnung nach einem der vorangegangenen Ansprüche,
**dadurch gekennzeichnet, dass**
zur Fixierung der relativen Lage des Hohlwellenbereichs (4) der von einem Schraubteil überdeckte Radialabstandsbereich mit dem von dem Hohlwellenbereich (4) überdeckten Radialabstandsbereich überlappt und mit dem von dem Spannring (1) überdeckten Radialabstandsbereich überlappt,
insbesondere wobei der von dem Hohlwellenbereich (4) überdeckte Radialabstandsbereich mit dem von dem Spannring (1) überdeckten Radialabstandsbereich nicht überlappt, insbesondere nur an ihn angrenzt.

7. Anordnung nach einem der vorangegangenen Ansprüche,
**dadurch gekennzeichnet, dass**
die in den Spannring (1) eingeschraubte Schraube, insbesondere Spannschraube (3), tangential gerichtet angeordnet ist.

8. Planetengetriebe mit einer Anordnung nach einem der vorangegangenen Ansprüche,
**dadurch gekennzeichnet, dass**
ein als Sonnenrad fungierendes Einsteckritzel (5) auf der vom Hohlwellenbereich (4) axial abgewandten Stirnseite des Wellenteils (7) in das Wellenteil (7) eingepresst und drehfest verbunden ist.

9. Anordnung nach einem der vorangegangenen Ansprüche, **dadurch gekennzeichnet, dass**
der Spannring (1) an einer Umfangsposition einen radial und axial durchgehenden Schlitz aufweist,
wobei die Schraube durch den Schlitz durchgeführt ist, wobei die Schraube in eine Gewindebohrung des Spannrings (1) zumindest teilweise eingeschraubt ist und der Kopf der Schraube den auf der von der Gewindebohrung abgewandten Seite des Schlitzes den Spannring (1) zur Gewindebohrung hindrückt.

10. Verfahren zum Herstellen einer Anordnung nach einem der vorangegangenen Ansprüche,
**dadurch gekennzeichnet, dass**
in Umfangsrichtung voneinander beabstandete Bereiche (2) einer Innenwandung des Hohlwellenbereichs (4) laserstrukturiert werden,
insbesondere wobei in Umfangsrichtung, insbesondere symmetrisch, zwischen jeweils zwei in Umfangsrichtung zueinander nächstbenachbarten Bereichen der Hohlwellenbereich (4) einen radial durchgehenden Schlitz aufweist.

11. Planetengetriebe mit einer Anordnung nach einem der vorangegangenen Ansprüche,
**dadurch gekennzeichnet, dass**
die Welle (9) eine Rotorwelle eines Elektromotors ist oder mit einer Rotorwelle eines Elektromotors drehfest verbunden ist,
ein als Sonnenrad fungierendes Einsteckritzel (5) auf der vom Hohlwellenbereich (4) axial abgewandten Stirnseite des Wellenteils (7) in das Wellenteil (7) eingepresst und drehfest verbunden ist,
wobei das Sonnenrad mit Planetenrädern im Eingriff ist, welche mit einem Hohlrad im Eingriff ist, zu dem das Wellenteil (7) drehbar gelagert ist,
wobei die Planetenräder auf Planetenbolzen drehgelagert sind, die in einen als Abtriebswelle des Planetengetriebes fungierenden Planetenträger eingepresst sind.

## Claims

1. Arrangement for clampingly connecting a shaft (9) to a shaft part (7) that has a hollow-shaft region (4) by means of a clamping ring (1) pushed onto the hollow-shaft region (4),
the hollow-shaft region (4) having radially continuous slots that are spaced apart, in particular regularly spaced apart, from one another in the circumferential direction,
**characterised in that**
the internal wall of the hollow-shaft region (4) in each case has a laser-structured region (2) in the circumferential direction between, in particular in the middle between, each two closest neighbouring slots in the circumferential direction,
the slots are open towards the axial end of the hollow-shaft region (4), i.e. in particular they open into the surroundings,
the laser-structured region (2) has recessed fusion spots and/or raised fusion spots,
the recessed fusion spots and/or the raised fusion spots each having a greater extent axially than in the circumferential direction.

2. Arrangement according to claim 1,
**characterised in that**
the slots extend axially.

3. Arrangement according to any of the preceding claims,
**characterised in that**
the raised fusion spots are configured as projections measuring more than 1 µm and less than 10 µm and/or the recessed fusion spots being configured as depressions measuring more than 1 µm and less than 10 µm.

4. Arrangement according to any of the preceding claims,
**characterised in that**
in the circumferential direction each laser-structured region (2) covers a circumferential-angle range between 10° and 60°, in particular between 20° and 40°.

5. Arrangement according to any of the preceding claims,
**characterised in that**
to fix the relative position of the hollow-shaft region (4) in relation to the clamping ring (1), a first portion of a screw part, in particular of a grub screw, is screwed into a radially directed threaded bore arranged in the hollow-shaft region (4), and the remaining portion of the screw part is arranged in the clamping ring (1).

6. Arrangement according to any of the preceding claims,
**characterised in that**
to fix the relative position of the hollow-shaft region (4), the radial-distance region covered by a screw part overlaps with the radial-distance region covered by the hollow-shaft region (4) and overlaps with the radial-distance region covered by the clamping ring (1),
the radial-distance region covered by the hollow-shaft region (4) in particular not overlapping with the radial-distance region covered by the clamping ring (1), in particular merely adjoining said radial-distance region.

7. Arrangement according to any of the preceding claims,
**characterised in that**
the screw, in particular the clamping screw (3), screwed into the clamping ring (1) is arranged in a tangentially directed manner.

8. Epicyclic gearing comprising an arrangement according to any of the preceding claims,
**characterised in that**
a plug-in pinion (5) acting as a sun gear is pressed into the shaft part (7) on the end face of the shaft part (7) facing axially away from the hollow-shaft region (4), and is connected for conjoint rotation.

9. Arrangement according to any of the preceding claims,
**characterised in that**
the clamping ring (1) has a radially and axially continuous slot at one circumferential position,
the screw being led through the slot, the screw being screwed into a threaded bore of the clamping ring (1) at least in part, and the head of the screw pressing the clamping ring (1) towards the threaded bore on the slot side facing away from the threaded bore.

10. Method for producing an arrangement according to any of the preceding claims, **characterised in that**
regions (2) of an internal wall of the hollow-shaft region (4) that are spaced apart from one another in the circumferential direction are laser-structured,
the hollow-shaft region (4) in particular having a radially continuous slot in the circumferential direction, in particular symmetrically, between each two closest neighbouring regions in the circumferential direction.

11. Epicyclic gearing comprising an arrangement according to any of the preceding claims,
**characterised in that**
the shaft (9) is a rotor shaft of an electric motor or is connected to a rotor shaft of an electric motor for conjoint rotation,
a plug-in pinion (5) acting as a sun gear is pressed into the shaft part (7) on the end face of the shaft part (7) facing axially away from the hollow-shaft region (4), and is connected for conjoint rotation,
the sun gear meshing with planet gears, which mesh with a ring gear in relation to which the shaft part (7) is rotatably mounted,
the planet gears being mounted in a rotary manner on planet pins, which are pressed into a planet carrier acting as the driven shaft of the epicyclic gearing.

## Revendications

1. Ensemble pour un raccordement par serrage d'un arbre (9) à une partie d'arbre (7) présentant une zone d'arbre creuse (4) au moyen d'une bague de serrage (1) poussée sur la zone d'arbre creuse (4),
la zone d'arbre creuse (4) présentant des fentes radialement continues, espacées les unes des autres dans la direction périphérique, en particulier espacées régulièrement, **caractérisé en ce que**
la paroi intérieure de la zone d'arbre creuse (4) présente respectivement une zone structurée par laser (2) dans la direction périphérique entre, en particulier de manière centrale, respectivement deux fentes les plus proches l'une de l'autre dans la direction périphérique,
les fentes sont ouvertes vers l'extrémité axiale de la zone d'arbre creuse (4), en particulier débouchent dans l'environnement,
la zone structurée par laser (2) présente des points de fusion profonde et/ou des points de fusion ;
les points de fusion profonde et/ou les points de fusion sont plus étendus axialement que dans la direction périphérique.

2. Ensemble selon la revendication 1,
**caractérisé en ce que**
les fentes s'étendent axialement.

3. Ensemble selon l'une quelconque des revendications précédentes,
**caractérisé en ce que**
les points de fusion sont réalisés sous la forme d'élévations de plus de 1 µm et de moins de 10 µm et/ou les points de fusion profonde sont réalisés sous la forme de cavités de plus de 1 µm et de moins de 10 µm.

4. Ensemble selon l'une quelconque des revendications précédentes,
**caractérisé en ce que**
la zone structurée par laser (2) respective recouvre, dans la direction périphérique, une zone angulaire périphérique comprise entre 10° et 60°, en particulier entre 20° et 40°.

5. Ensemble selon l'une quelconque des revendications précédentes,
**caractérisé en ce que**
pour fixer la position relative de la zone d'arbre creuse (4) par rapport à la bague de serrage (1), une première zone partielle d'une partie vissée, en particulier d'une vis sans tête, est vissée dans un alésage fileté orienté radialement, agencé dans la zone d'arbre creuse (4), et la zone partielle restante de la partie vissée est agencée dans la bague de serrage (1).

6. Ensemble selon l'une quelconque des revendications précédentes,
**caractérisé en ce que**
pour fixer la position relative de la zone d'arbre creuse (4), la zone de distance radiale recouverte par une partie vissée chevauche la zone de distance radiale recouverte par la zone d'arbre creuse (4) et chevauche la zone de distance radiale recouverte par la bague de serrage (1),
En particulier la zone de distance radiale recouverte par la zone d'arbre creuse (4) ne chevauchant pas la zone de distance radiale recouverte par la bague de serrage (1), en particulier elle n'est qu'adjacente à celle-ci.

7. Ensemble selon l'une quelconque des revendications précédentes,
**caractérisé en ce que**
la vis vissée dans la bague de serrage (1), en particulier la vis de serrage (3), est agencée orientée tangentiellement.

8. Engrenage planétaire avec un ensemble selon l'une quelconque des revendications précédentes, **caractérisé en ce que**
un pignon enfichable (5) servant de roue solaire est pressé dans la partie d'arbre (7) sur le côté frontal de la partie d'arbre (7) opposé axialement à la zone d'arbre creuse (4) et est relié de manière solidaire en rotation.

9. Ensemble selon l'une quelconque des revendications précédentes,
**caractérisé en ce que**
la bague de serrage (1) présente une fente continue radiale et axiale au niveau d'une position circonférentielle,
la vis étant traversée par la fente, la vis étant vissée au moins partiellement dans un alésage fileté de la bague de serrage (1) et la tête de la vis poussant la bague de serrage (1) vers l'alésage fileté sur le côté de la fente opposé à l'alésage fileté.

10. Procédé de fabrication d'un ensemble selon l'une quelconque des revendications précédentes,
**caractérisé en ce que**
des zones (2) d'une paroi intérieure de la zone d'arbre creuse (4) espacées dans la direction périphérique sont structurées par laser,
en particulier, la zone d'arbre creuse (4) présente une fente continue radiale dans la direction périphérique, en particulier symétrique, entre respectivement deux zones proches l'une de l'autre dans la direction périphérique.

11. Engrenage planétaire avec un ensemble selon l'une quelconque des revendications précédentes,
**caractérisé en ce que**
l'arbre (9) est un arbre de rotor d'un moteur électrique ou est relié solidaire en rotation à un arbre de rotor d'un moteur électrique,
un pignon enfichable (5) servant de roue solaire est pressé dans la partie d'arbre (7) sur le côté frontal de la partie d'arbre (7) opposé axialement à la zone d'arbre creuse (4) et est relié de manière solidaire en rotation,
la roue solaire venant en prise avec des roues planétaires, qui viennent en prise avec une roue creuse, à laquelle la partie d'arbre (7) est montée rotative,
les engrenages planétaires étant montés en rotation sur des boulons planétaires qui sont enfoncés dans un porte-satellites servant d'arbre de sortie de l'engrenage planétaire.
